# EUROPEAN PATENT APPLICATION

(11) **EP 1 095 855 A1**
(43) Date of publication of application: **02.05.2001**
(21) Application number: 00122365.0
(22) Date of filing: 25.10.2000
(51) Int. Cl.: B65B 7/14

(54) **Device and method for heating the inner surface of the open end of tubular containers made of plastic material**

(30) Priority: 26.10.1999 IT BO990573
(71) Applicant: Tonazzi S.r.l., 20023 Cerro Maggiore (Milano) (IT)
(72) Inventor: Marchesini, Maurizio, 40065 Pianoro (Bologna) (IT)
(74) Representative: Dall'Olio, Giancarlo

(57) **Abstract**

A device for heating the inner surface of the open end of tubular plastic containers filled with doughy product includes a heating head (2) equipped with a tip (3). The cross-section of the tip (3) corresponds to the cross-section of the inner terminal part (7) of the containers (1). The tip (3) is introduced into the open end (5) of the containers (1) to heat it. The cross-section of the tip (3) increases progressively and continuously, beginning from its free end (10), from an extension smaller than the extension of the containers inner terminal part (7) up to an extension bigger than the extension of the containers inner terminal part (7). The head (2) and the tip (3) are heated by electric resistances (8) and have breather pipes (9) situated thereinside and allowing the air to go out from the container.

## Description

The present invention relates to packaging products into containers.

In particular, the present invention concerns a device and method for heating the inner surface of one end of the plastic tubular containers before this end is definitely closed by pressure.

It is known that doughy loose products like cosmetic articles, toothpaste, food stuff, are often packed in tubular containers, made of plastic or externally plasticized metal.

One end of the tubular container features a cap with a screw or snap closing, while the product is introduced by the other end, still open, which is closed by high frequency welding or ultrasounds, or by pressing and gluing its terminal edge.

According to known techniques, the closing edge is pressed by e.g. heated jaws, which make the tubular container end melt and close it by sticking.

In other cases, the non heated jaws act after the inner terminal surface of the tubular container has been heated, so as to melt and become sticky.

According to the current state of the art, different methods for heating the inner terminal surface of the tubular container have been used, each one studied for reducing the necessary time and improve the closing results.

An example of these methods has been described in the publication US-A-2.926.474. The publications GB-A-2.134.037, DE-A-37 44 402 and WO-A-93/04844 describe devices each including a heating head which is introduced in the open end of the tubular container, already filled with the product, and which emits a flow of hot air from a series of radial holes.

Thus, the inner terminal surface of the tubular container is heated and consequently, can be closed by the jaws.

The publication EP-A-0 667 285 describes a device including a heating head which is introduced into the open end of the tubular container, coaxially therewith, and which heats directly the inner terminal surface thereof.

Afterwards, the end of the tubular container is closed by the usual jaws.

The heating head is equipped with inner electric resistors which supply the necessary heat and features inner canalizations which allow the air to leave the tubular container during the introduction of the head.

The transfer of heat from the heating head is improved by means, in different embodiments, which press the open end of the tubular container against the head, when the latter is introduced.

According to a first embodiment, the terminal part of the tubular container is surrounded by a collar, which features a groove extending along the wall of the collar turned toward the container.

A sheath of pliable material is introduced into the groove.

When the heating head is introduced into the open end of the tubular container, a jet of air passes through the sheath, swelling it, and thus making the inner terminal surface of the container press against the heating head.

According to other embodiments, a series of sectors are provided, which are moved radially, or jaws, which act radially, so as to press the tubular container against the heating head.

The experts in the field know big problems deriving from use of the described devices.

The air heating systems require a perfect centering of the emitting nozzles with respect to the open end of the tubular container, so as to deliver the heat in a uniform way.

Moreover, such devices are complicated, and therefore the production and maintenance thereof is expensive.

It is necessary to prepare a generator of hot air, a circuit for hot air and assure that the nozzles are always perfectly open.

On the other hand, the direct heating devices require means which assure a sufficient contact surface and make the contact effective to facilitate the heat transmission.

These means, which include the collar with the groove and the sheath, the jaws or the radially driven sectors, are complicated and consequently, their production as well as maintenance are expensive.

Moreover, these means becomes hot themselves and must be cooled.

Therefore, it is necessary to equip the devices with cooling systems, which makes the construction still more complicated and, therefore increases the production and maintenance costs.

The object of the present invention is to propose a device and a method for best direct heating of the inner terminal surface of the tubular container, already filled, without using outer means.

Another object of the present invention is to obtain the proposed device by a simple and practical technical solution, which simplifies the device construction and reduces the costs thereof.

A further object of the present invention is to propose a device which simplifies and reduces costs also of the maintenance operations.

The above mentioned objects are obtained by a device and a method according to the contents of main claims. Other features of the device are described in the sub-claims.

The characteristic features of the present invention, which have not appeared so far, will be pointed out in the following description of a preferred, but not only embodiment, with reference to the enclosed drawings, in which:
- Figure 1 is a schematic view of the proposed device detached from the open tubular container;
- Figure 2 is a schematic view of the device of Figure 1, introduced into the open end of the tubular container.

With reference to the enclosed figures, the reference numeral 1 indicates one of the plastic tubular containers, whose open end 5 is to be closed after the container has been filled with the product 11.

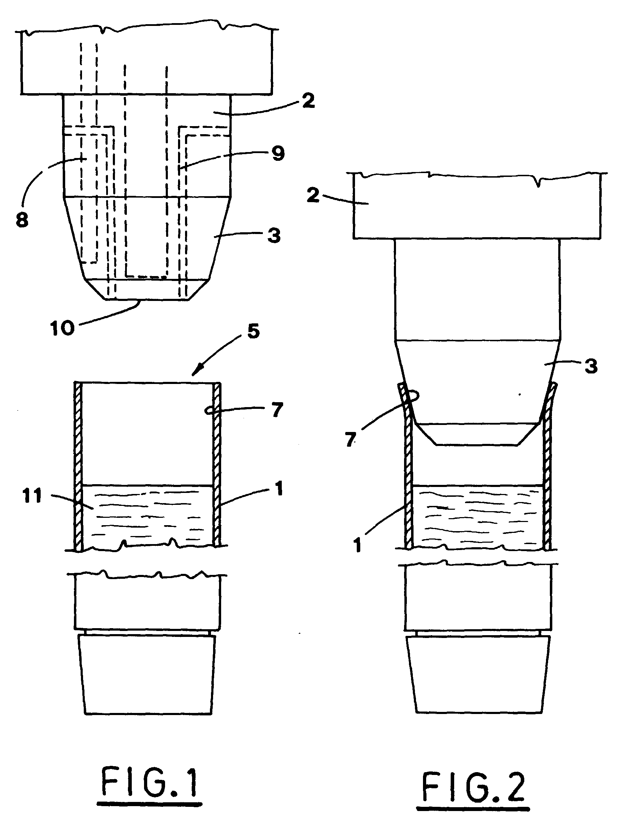

The device for heating the inner surface of the open end of the containers 1, whose substantial parts are shown schematically in Figures 1 and 2, includes a heating head 2, from which protrudes a tip 3.

The cross-section of the tip 3 corresponds to the inner terminal cross-section 7 of the containers 1, e.g. circular.

However, it is understood that, if the container cross-section has a different shape, e.g. elliptic or, as used in the technical jargon, in presence of a shaped closure, also the tip 3 cross-section assumes the same shape.

Then, the tip 3 is introduced into the open end 5 of the containers 1, so as to heat and melt it, so that it is possible to close the bottom of the container by closing means, e.g. jaws.

The closing means are not shown, since they are well known to the experts in the field and do not present common points with the claimed invention.

The main point of the proposed invention lies in the fact that the cross-section of the tip 3 increases progressively and continuously, beginning from its free end 10, from an extension smaller than the extension of the containers inner terminal part 7 up to an extension bigger than the extension of the containers inner terminal part 7.

Heating means 8 are situated inside the head 2.

In the described case, the heating means include an electric resistance, supplied in a known way, without changing the inventive aspect claimed herein.

Moreover, it is obvious that the heating means can be situated outside the head 2, which is e.g. ring-like, and this feature remains within the scope of the claims.

Moreover, breather pipes 9 are situated inside the head 2 and open in the region of the free end 10 of the tip 3.

The breather pipes 9, as it is obvious to those skilled in the field, are aimed at allowing the air to go out from the container during the introduction of the tip 3 into the free end 5.

The described device allows to carry out the method, which will be explained in the following, thus explaining also the operation thereof.

The aim of the method is to obtain the heating of the inner surface of the open end of the plastic tubular containers 1.

The method includes a series of steps.

The first step includes the introduction of a heating body, substantially the previously mentioned tip 3, into the open end 5 of the containers 1.

It is important for the correct carrying out the method, that cross-section of the heating body, i.e. the tip 3, correspond to the inner terminal part of the containers 1, and that the cross-section of said heating body increase progressively and continuously, from an extension smaller than the extension of the containers inner terminal part 7 up to an extension bigger than the extension of the containers inner terminal part 7.

The heating body slightly widens the terminal part 7, while entering it.

The progressively increasing shape of the tip 3 allows also to center more precisely the container 1 with respect to the heating head 2.

The widened terminal part 7 reacts elastically and adheres perfectly to a corresponding surface of the heating body.

This allows the maximum transfer of the heat from the heating head 2 to the container 1 without outer pressing means, such as collars, jaws, elastic rings or other used in the field.

Finally, the heating body is withdrawn from the open end 5 of the container 1, which is closed as previously described.

The advantages of the proposed device are obvious, also in relation to the carrying out of the corresponding method.

The main advantage derives from the simplicity of the device which does not use outer means for encircling the container open end, as it was necessary while using known devices.

The effect of pressure of the tip 3 on the inner terminal part 7 is obtained by using the reaction of the container 1 to being widened by the tip 3.

As well seen in Figure 2, the terminal part 7 adheres perfectly to the tip 3 along a portion, which is big enough to assure the closing of the container 1, without using outer means.

The progressively increasing section of the tip 3 determines also the perfect centering of the heating head 2 with respect to the tubular container 1.

The immediate consequence of these advantages is the reduction of the device production and maintenance costs, since a considerable part of the working means used by the known devices is eliminated.

Moreover, it is to be pointed out that also means for cooling the organs for pressing the container end against the heating body, are eliminated.

Therefore, the device is extremely simple, yet functional.

Moreover, the working steps are undeniably simplified, since it is no longer necessary to close the means for pressing the container in step relation with the introduction of the heating head.

Also this simplifies the device.

It is understood that what above, has been described as a pure, not limitative example, therefore, possible variants of the invention remain within the protective scope of the present technical solution, as described above and claimed hereinafter.

## Claims

1. Device for heating the inner surface of the open end of tubular plastic containers, including a heating head (2) featuring a tip (3) aimed at being introduced into said open end (5) of said containers (1) in order to heat it, the cross-section of said tip (3) corresponding to the cross-section of the inner terminal part (7) of said containers, said device being characterized in that the cross-section of said tip (3) increases progressively and continuously, beginning from its free end (10), from an extension smaller than the extension of said containers inner terminal part (7) up to an extension bigger than the extension of said containers inner terminal part (7).

2. Device, according to claim 1, characterized in that said heating head (2) is equipped with heating means (8).

3. Device, according to claim 2, characterized in that said heating means (8) are situated inside said head (2) and extend up to said tip (3).

4. Device, according to claim 3, characterized in that said heating means include at least one electric resistance (8).

5. Device, according to claim 1, characterized in that said head (2) includes breather pipes (9) situated thereinside and opening in the region of the free end (10) of the tip (3).

6. Method for heating the inner surface of the open end of tubular plastic containers, characterized in that it includes the following steps:
introduction of a heating body, whose cross-section corresponds to the cross-section of the inner terminal part (7) of said containers, into said open end (5) of said containers (1), the cross-section of said heating body increasing progressively and continuously from an extension smaller than the extension of said containers (1) inner terminal part (7) up to an extension bigger than the extension of said containers inner terminal part (7);
widening of the inner terminal part (7) of said open end of said containers (1) by gradual introducing said heating body into said terminal part (7), until said inner terminal part (7) adheres to a corresponding surface of said heating body;
withdrawing of said heating body from the open end (5) of said container (1).
